# EUROPEAN PATENT APPLICATION

(11) **EP 3 041 185 A1**
(43) Date of publication of application: **06.07.2016**
(21) Application number: 14307194.2
(22) Date of filing: 29.12.2014
(51) Int. Cl.: H04L 29/06, G06F 21/35, H04W 12/06

(54) **A method for authenticating a user equipment in order to established a secured communication session with a server**

(71) Applicant: Orange, 75015 Paris (FR)
(72) Inventor: Terasaki, Shinya, Shinjuku-ku, Tokyo 160-0022 (JP)

(57) **Abstract**

The invention relates to a system comprising a user equipment, a server and a mobile device, wherein :
- The user equipment sends a request for authentication to the server, said request for authentication comprising an identifier of a user of the user equipment and a first authenticating parameter of said user,
- Based on the identifier of the user and the first authenticating parameter, the serve retrieves an encryption key associated to the user,
- The server encrypts a second authenticating parameter associated to the user of the user equipment using the encryption key associated to the user of the user equipment,
- The server encodes said encrypted second authenticating parameter in the form of a multi-dimensional code,
- The server transmits said multi-dimensional code to the user equipment,
- The user equipment displays said multi-dimensional code on a display of the user equipment;
- the mobile device decodes the multi-dimensional code, and decrypts the second authenticating parameter using a decryption key associated to the user of the user equipment stored on the mobile device,
- the user equipment detects on a user interface of the user equipment an input representing the decrypted second authenticating parameter displayed on a display of the mobile device,
- the user equipment transmits a message to the server comprising the decrypted second authenticating parameter,
- If the decrypted second authenticating parameter transmitted by the user equipment equals the second authenticating parameter stored in the server, the server establishes the secured communication session.

## Description

The present invention generally relates to the authentication of a user equipment, such as a personal computer, in order to established a secured communication session with a server.

Secure Shell (SSH) is a cryptographic network protocol for secure data communication, remote command-line login, remote command execution, and other secure network services between two networked devices. Secure Shell relies on the use public-key cryptography for authentication of the networked devices.

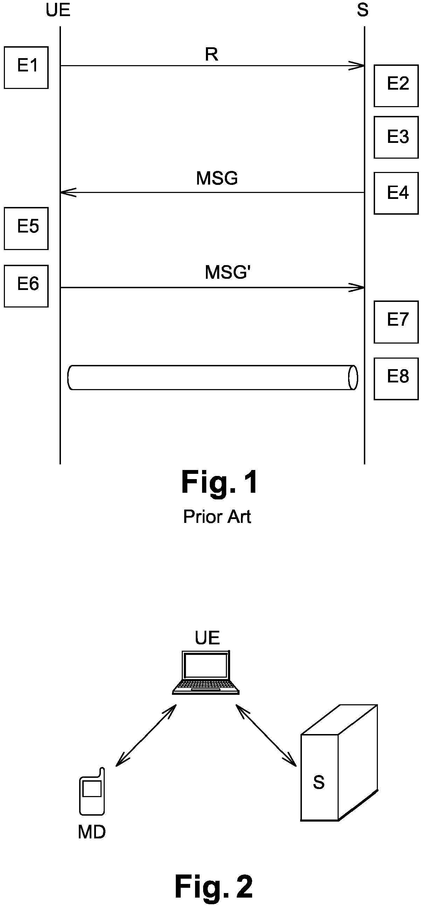

Figure 1 represents a method for authenticating a user equipment UE in order to established a secured communication session with a server S using Secure Shell.

In a step E1, the user equipment UE sends a request R for authentication to the server S, said request for authentication comprising an identifier of a user of the user equipment.

In a step E2, upon reception of the request R, the server S retrieves a public cryptographic key associated to the user equipment UE.

In a step E3, the server S encrypts an authenticating parameter associated to the user of the user equipment UE using the public key associated to the user of the user equipment UE.

In a step E4, the server S transmits the encrypted authenticating parameter to the user equipment UE in a message MSG.

In a step E5, the user equipment UE decrypts the received authenticating parameter using a private cryptographic key stored on the user equipment UE.

In a step E6, the user equipment UE transmits a message MSG' to the server S comprising the decrypted authenticating parameter.

In a step E7, the server S compares the decrypted authenticating parameter equals the authenticating parameter stored in the server, and if the two authenticating parameters are equal, the sever S establishes the secured communication session in a communication session.

Such a solution, even if secure, relies on the storing of the private encryption key on the user equipment. The fact that the private encryption key is stored on the user equipment constitutes a security flaw.

It is an objective of the present invention to overcome disadvantages and/or make improvements in the prior art.

In that respect, the present invention relates to a system comprising a user equipment, a server and a mobile device, wherein :
- The user equipment sends a request for authentication to the server, said request for authentication comprising an identifier of a user of the user equipment and a first authenticating parameter of said user,
- Based on the identifier of the user of the user equipment and the first authenticating parameter, the serve retrieves an encryption key associated to the user of the user equipment,
- The server encrypts a second authenticating parameter associated to the user of the user equipment using the encryption key associated to the user of the user equipment,
- The server encodes said encrypted second authenticating parameter in the form of a multi-dimensional code,
- The server transmits said multi-dimensional code to the user equipment,
- The user equipment displays said multi-dimensional code on a display of the user equipment;
- the mobile device decodes the multi-dimensional code,
- the mobile device decrypts the second authenticating parameter using a decryption key associated to the user of the user equipment stored on the mobile device,
- the user equipment detects on a user interface of the user equipment an input representing the decrypted second authenticating parameter displayed on a display of the mobile device,
- the user equipment transmits a message to the server comprising the decrypted second authenticating parameter,
- If the decrypted second authenticating parameter transmitted by the user equipment equals the second authenticating parameter stored in the server, the server establishes the secured communication session.

Such a solution increases the security of the authentication method of the user equipment with the server.

Indeed, in the solution of the invention enables the separation of the decryption key associated to the user of the user equipment, for example a private-key, from user equipment, thus the authentication process becomes more secure.

Furthermore, the user of the user equipment doesn't need special device for storing the decryption key such as a PKI (Public Key Infrastructure) dongle which can be easily lost or duplicated.

A multi-dimensional code is for example a bar-code or a QR code which are easily readable by mobile devices.

The invention then provides a method for authenticating a user equipment in order to established a secured communication session with a server; wherein the server :
- Receives a request for authentication sent by the user equipment, said request for authentication comprising an identifier of a user of the user equipment and a first authenticating parameter of said user,
- Based on the identifier of the user of the user equipment and the first authenticating parameter, retrieves a first encryption key associated to the user of the user equipment,
- Encrypts a second authenticating parameter associated to the user of the user equipment using the encryption key associated to the user of the user equipment,
- Encodes said encrypted second authenticating parameter in the form of a multi-dimensional code,
- Transmits said multi-dimensional code to the user equipment;
- Receives a message sent from the user equipment comprising the decrypted second authenticating parameter, the second authenticating parameter being decrypted by a mobile device capable of decoding the multi-dimensional code and comprising a decryption key associated to the user of the user equipment,
- If the decrypted second authenticating parameter equals the second authenticating parameter stored in the server, establishes the secured communication session.

Another object of the invention is a method for establishing a secured communication session between a user equipment and a server, wherein the user equipment :
- Sends a request for authentication to the server, said request for authentication comprising an identifier of a user of the user equipment and a first authenticating parameter of said user,
- Receives a multi-dimensional code representing a second authenticating parameter associated to the user of the user equipment encrypted by the server using an encryption key associated to the user of the user equipment,
- Displays said multi-dimensional code on a display of the user equipment;
- Detects on a user interface of the user equipment an input representing the decrypted second authenticating parameter, the second authenticating being decrypted by a mobile device capable of decoding the multi-dimensional code and comprising a decryption key associated to the user of the user equipment,
- Transmits a message to the server comprising the decrypted second authenticating parameter.

The invention provides a server capable of authenticating a user equipment in order to established a secured communication session; wherein the server comprises :
- A receiver for receiving a request for authentication sent by the user equipment, said request for authentication comprising an identifier of a user of the user equipment and a first authenticating parameter of said user,
- Based on the identifier of the user of the user equipment and the first authenticating parameter, means for retrieving a first encryption key associated to the user of the user equipment,
- Mean for encrypting a second authenticating parameter associated to the user of the user equipment using the encryption key associated to the user of the user equipment,
- An encoder for encoding said encrypted second authenticating parameter in the form of a multi-dimensional code,
- A transmitter for transmitting said multi-dimensional code to the user equipment,
- The receiver for receiving a message sent from the user equipment comprising the decrypted second authenticating parameter, the second authenticating parameter being decrypted by a mobile device capable of decoding the multi-dimensional code and comprising a decryption key associated to the user of the user equipment,
- If the decrypted second authenticating parameter equals the second authenticating parameter stored in the server, means of establishing the secured communication session.

The invention provides a user equipment capable of establishing a secured communication session with a server, wherein the user equipment comprises :
- Mean for sending a request for authentication to the server, said request for authentication comprising an identifier of a user of the user equipment and a first authenticating parameter of said user,
- A receiver for receiving a multi-dimensional code representing a second authenticating parameter associated to the user of the user equipment encrypted by the server using an encryption key associated to the user of the user equipment,
- A display for displaying said multi-dimensional code,
- A detector for detecting on a user interface of the user equipment an input representing the decrypted second authenticating parameter, the second authenticating being decrypted by a mobile device capable of decoding the multi-dimensional code and comprising a decryption key associated to the user of the user equipment,
- Means for transmitting a message to the server comprising the decrypted second authenticating parameter.

Such a user equipment is for example a workstation, a personal computer or a laptop the content of which is secured.

Finally, one object of the invention concerns computer programs, in particular computer programs on or in an information medium or memory, suitable for implementing the methods object of the invention. These programs can use any programming language, and be in the form of source code, binary code, or of code intermediate between source code and object code such as in a partially compiled form, or in any other desirable form for implementing the communication methods according to the invention.

The information medium may be any entity or device capable of storing the programs. For example, the medium can comprise a storage means, such as a ROM, for example a CD ROM or a microelectronic circuit ROM, or else a magnetic recording means, for example a diskette (floppy disk) or a hard disk.

Moreover, the information medium may be a transmissible medium such as an electrical or optical signal, which may be conveyed via an electrical or optical cable, by radio or by other means. The programs according to the invention may in particular be downloaded from a network of Internet type.

The present invention is explained in further detail, and by way of example, with reference to the accompanying drawings wherein :
**Figure 1** represents a method for authenticating a user equipment UE in order to established a secured communication session with a server S using Secure Shell according to the prior art,
**Figure 2** represents a system in which the method for authenticating a user equipment according to the invention is executed,
**Figure 3** represents the steps of the method for authenticating a user equipment according to the invention.
**Figure 2** represents a system in which the method for authenticating a user equipment according to the invention is executed.

The system comprises a mobile device MD belonging to a user. Such a mobile device MD is for example a smartphone, a tablet, a mobile phone, etc. capable of reading multi-dimensional codes such as QR (Quick Response) codes or bar-codes.

The system comprises also a user equipment UE such as a working station, a laptop, a personal computer, a tablet, et., requiring the establishment of a secured communication session with a server S and belonging to the user of the mobile device.

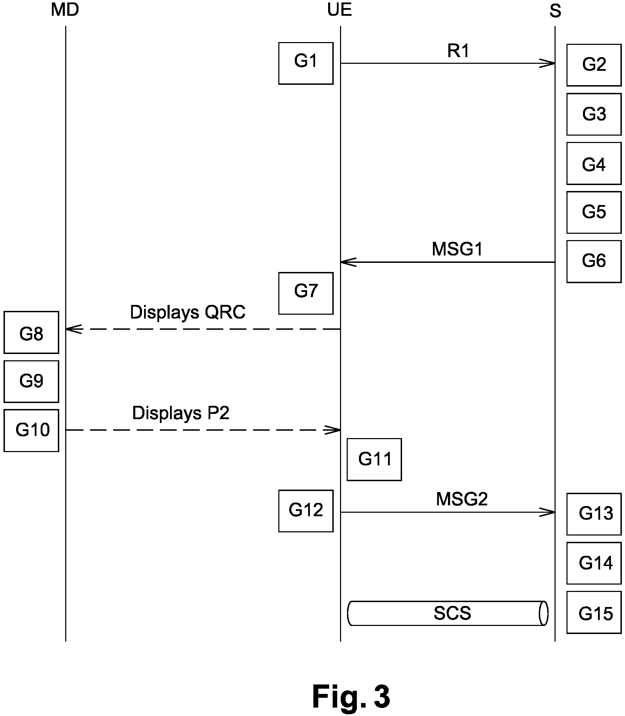

**Figure 3** represents the steps of the method for authenticating a user equipment UE according to the invention.

In a step G1, the user equipment UE sends a request R1 for authentication to the server S, said request R1 for authentication comprising an identifier Id1 of a user of the user equipment UE, such as a login, and a first authenticating parameter P1 of said user such as a password, a PIN code, etc.

In a step G2, the server S receives the request R1. Based on the identifier Id1 of the user of the user equipment UE and the first authenticating parameter P1, the serve S retrieves an encryption key PK1 associated to the user of the user equipment UE during a step G3. The encryption key PK1 may be a public key associated to the user of the user equipment UE.

In a step G4, the server S encrypts a second authenticating parameter P2 associated to the user of the user equipment UE using the encryption key PK1. The second authenticating parameter P2 is for example another password or another PIN code.

In a step G5, the server S encodes the encrypted authenticating parameter P2 in the form of a multi-dimensional code QRC. The multi-dimensional code QRC may be a bar-code or a QR code for example.

In a step G6, the server S transmits said multi-dimensional code QRC to the user equipment UE in a message MSG1.

In a step G7, the user equipment UE displays the multi-dimensional code QRC received in the message MSG1 on a display of the user equipment UE. This step is represented by the first dotted line drawn between the user equipment UE and the mobile device MD on figure 3.

In a step G8, the mobile device MD decodes the multi-dimensional code QRC captured by a camera of the mobile device MD.

Once the multi-dimensional code QRC is decoded, the mobile device MD decrypts the second authenticating parameter P2 using a decryption key PK2 associated to the user of the user equipment UE stored on the mobile device MD in a step G9. The decryption key PK2 is for example a private key associated to the user of the user equipment UE and to the public key PK1. The decryption key KP2 may be stored on the SIM card of the mobile device MD for higher security.

The mobile device MD then displays on its screen the decrypted second authenticating parameter P2 in a step G10. This step is represented by the second dotted line drawn between the user equipment UE and the mobile device MD on figure 3.

In a step G11, the user equipment UE detects on a user interface of the user equipment UE, such as a keyboard or a touch screen, an input representing the decrypted authenticating parameter P2 displayed on the screen of the mobile device MD. The authenticating parameter P2 is for example typed by the user of the user equipment UE on the keyboard of the user equipment UE.

In a step G12, the user equipment UE transmits a message MSG2 to the server S comprising the authenticating parameter P2 that was detected by the user equipment UE.

In a step G13, the server S receives the message MSG2 sent from the user equipment UE comprising the decrypted authenticating parameter P2.

In a step G14, the server S compares the authenticating parameter P2 stored in the server S with the authenticating parameter P2 received in the message MSG2.

If the decrypted authenticating parameter P2 equals the authenticating parameter P2 stored in the server S, then the server S establishes a secured communication session SCS with the user equipment UE during a step G15

## Claims

1. A system comprising a user equipment, a server and a mobile device, wherein :
- The user equipment sends a request for authentication to the server, said request for authentication comprising an identifier of a user of the user equipment and a first authenticating parameter of said user,
- Based on the identifier of the user of the user equipment and the first authenticating parameter, the serve retrieves an encryption key associated to the user of the user equipment,
- The server encrypts a second authenticating parameter associated to the user of the user equipment using the encryption key associated to the user of the user equipment,
- The server encodes said encrypted second authenticating parameter in the form of a multi-dimensional code,
- The server transmits said multi-dimensional code to the user equipment,
- The user equipment displays said multi-dimensional code on a display of the user equipment;
- the mobile device decodes the multi-dimensional code,
- the mobile device decrypts the second authenticating parameter using a decryption key associated to the user of the user equipment stored on the mobile device,
- the user equipment detects on a user interface of the user equipment an input representing the decrypted second authenticating parameter displayed on a display of the mobile device,
- the user equipment transmits a message to the server comprising the decrypted second authenticating parameter,
- If the decrypted second authenticating parameter transmitted by the user equipment equals the second authenticating parameter stored in the server, the server establishes the secured communication session.

2. A method for authenticating a user equipment in order to established a secured communication session with a server; wherein the server :
- Receives a request for authentication sent by the user equipment, said request for authentication comprising an identifier of a user of the user equipment and a first authenticating parameter of said user,
- Based on the identifier of the user of the user equipment and the first authenticating parameter, retrieves a first encryption key associated to the user of the user equipment,
- Encrypts a second authenticating parameter associated to the user of the user equipment using the encryption key associated to the user of the user equipment,
- Encodes said encrypted second authenticating parameter in the form of a multi-dimensional code,
- Transmits said multi-dimensional code to the user equipment;
- Receives a message sent from the user equipment comprising the decrypted second authenticating parameter, the second authenticating parameter being decrypted by a mobile device capable of decoding the multi-dimensional code and comprising a decryption key associated to the user of the user equipment,
- If the decrypted second authenticating parameter equals the second authenticating parameter stored in the server, establishes the secured communication session.

3. A method for establishing a secured communication session between a user equipment and a server, wherein the user equipment :
- Sends a request for authentication to the server, said request for authentication comprising an identifier of a user of the user equipment and a first authenticating parameter of said user,
- Receives a multi-dimensional code representing a second authenticating parameter associated to the user of the user equipment encrypted by the server using an encryption key associated to the user of the user equipment,
- Displays said multi-dimensional code on a display of the user equipment;
- Detects on a user interface of the user equipment an input representing the decrypted second authenticating parameter, the second authenticating being decrypted by a mobile device capable of decoding the multi-dimensional code and comprising a decryption key associated to the user of the user equipment,
- Transmits a message to the server comprising the decrypted second authenticating parameter.

4. A server capable of authenticating a user equipment in order to established a secured communication session; wherein the server comprises :
- A receiver for receiving a request for authentication sent by the user equipment, said request for authentication comprising an identifier of a user of the user equipment and a first authenticating parameter of said user,
- Based on the identifier of the user of the user equipment and the first authenticating parameter, means for retrieving a first encryption key associated to the user of the user equipment,
- Mean for encrypting a second authenticating parameter associated to the user of the user equipment using the encryption key associated to the user of the user equipment,
- An encoder for encoding said encrypted second authenticating parameter in the form of a multi-dimensional code,
- A transmitter for transmitting said multi-dimensional code to the user equipment,
- The receiver for receiving a message sent from the user equipment comprising the decrypted second authenticating parameter, the second authenticating parameter being decrypted by a mobile device capable of decoding the multi-dimensional code and comprising a decryption key associated to the user of the user equipment,
- If the decrypted second authenticating parameter equals the second authenticating parameter stored in the server, means of establishing the secured communication session.

5. A user equipment capable of establishing a secured communication session with a server, wherein the user equipment comprises :
- Mean for sending a request for authentication to the server, said request for authentication comprising an identifier of a user of the user equipment and a first authenticating parameter of said user,
- A receiver for receiving a multi-dimensional code representing a second authenticating parameter associated to the user of the user equipment encrypted by the server using an encryption key associated to the user of the user equipment,
- A display for displaying said multi-dimensional code,
- A detector for detecting on a user interface of the user equipment an input representing the decrypted second authenticating parameter, the second authenticating being decrypted by a mobile device capable of decoding the multi-dimensional code and comprising a decryption key associated to the user of the user equipment,
- Means for transmitting a message to the server comprising the decrypted second authenticating parameter.

6. A computer program **characterized in that** it comprises program code instructions for the implementation of the steps of the method for authenticating a user equipment in order to established a secured communication session with a server according to claim 2 when the program is executed by a processor.

7. A computer program **characterized in that** it comprises program code instructions for the implementation of the steps of the method for establishing a secured communication session between a user equipment and a server according to claim 3 when the program is executed by a processor.
